# EUROPEAN PATENT APPLICATION

(11) **EP 4 492 535 A1**
(43) Date of publication of application: **15.01.2025**
(21) Application number: 24186823.1
(22) Date of filing: 05.07.2024
(51) Int. Cl.: H01M 10/54, H01M 4/133, H01M 4/587, H01M 10/0525, H01M 10/44

(54) **REPRODUCTION METHOD FOR NEGATIVE ELECTRODE ACTIVE MATERIAL**

(30) Priority: 14.07.2023 JP 2023115546
(71) Applicant: Prime Planet Energy & Solutions, Inc., Chuo-ku Tokyo 103-0022 (JP)
(72) Inventor: TAKESHITA, Shuhei, Tokyo, 103-0022 (JP); OKUDA, Koji, Tokyo, 103-0022 (JP); SUZUKI, Shinya, Tokyo, 103-0022 (JP)
(74) Representative: Kuhnen & Wacker Patent- und Rechtsanwaltsbüro PartG mbB

(57) **Abstract**

The present disclosure relates to a reproduction method for obtaining a negative electrode active material with improved rapid charge-discharge property, from a used lithium ion secondary battery. A technology disclosed herein is directed to a reproduction method for a negative electrode active material from a used lithium ion secondary battery, including: a preparation step of preparing the used lithium ion secondary battery including a positive electrode, a negative electrode including a negative electrode active material containing a carbon material, and an electrolyte; a charging step of charging the lithium ion secondary battery; a discharging step of discharging the lithium ion secondary battery obtained after the charging step, at a discharge rate higher than a charge rate of the charging step; and a recovery step of recovering the negative electrode active material containing the carbon material from the negative electrode in the lithium ion secondary battery obtained after the discharging step.

## Description

### BACKGROUND

The present disclosure relates to a reproduction method for a negative electrode active material.

Secondary batteries are suitably used in a variety of applications, including drive power sources mounted on vehicles, such as hybrid electric vehicles (HEV), plug-in hybrid electric vehicles (PHEV), and electric vehicles (BEV). The demand for these batteries is rapidly increasing. For this demand, consequently, there is also an increasing demand for technologies related to the reproduction of negative electrode active materials from used lithium ion secondary batteries. For example, Japanese Patent Application Publication No. 2006-228509 discloses the following technology as a technology related to the reproduction of a negative electrode active material. The technology involves: taking out a negative electrode from a lithium ion secondary battery; washing the negative electrode with a liquid containing water; separating the negative electrode into a current collector substrate and a negative electrode composite material containing a negative electrode active material and a binding agent; mixing the negative electrode composite material in a solvent that can dissolve or disperse the binding agent to fabricate a negative electrode paste; and applying the paste onto the negative electrode current collector.

### SUMMARY

In the negative electrode active material, not only technologies related to reproduction of negative electrode active materials, but also improvement in performance of reproduced negative electrode active materials, for example, improvement in rapid charge-discharge property, are required. In the negative electrode active material recovered by a conventional technology as disclosed in Japanese Patent Application Publication No. 2006-228509, the rapid charge-discharge property is not considered. Therefore, the negative electrode active material recovered by the conventional technology cannot sufficiently meet the requirement for the rapid charge-discharge property.

The technology disclosed herein has been made in view of the above circumstances and is directed to provide a reproduction method for obtaining a negative electrode active material with improved rapid charge-discharge property, from a used lithium ion secondary battery.

The technology disclosed herein provides a reproduction method for obtaining a negative electrode active material from a used lithium ion secondary battery, the method including: a preparation step of preparing the used lithium ion secondary battery including a positive electrode, a negative electrode including a negative electrode active material containing a carbon material and an electrolyte; a charging step of charging the lithium ion secondary battery; a discharging step of discharging the lithium ion secondary battery obtained after the charging step, at a discharge rate higher than a charge rate of the charging step; and a recovery step of recovering the negative electrode active material containing the carbon material from the negative electrode in the lithium ion secondary battery obtained after the discharging step.

With this configuration, the lithium ion secondary battery is discharged at a discharge rate higher than the charge rate, so that a surface layer of the negative electrode active material of the negative electrode is amorphized, improving the rapid charge-discharge property of the negative electrode active material. Therefore, the negative electrode active material with improved rapid charge-discharge performance can be reproduced.

### BRIEF DESCRIPTION OF THE DRAWINGS

FIG. 1 is a longitudinal-sectional view schematically showing an internal structure of a lithium ion secondary battery according to one embodiment.
FIG. 2 is a perspective view schematically showing an electrode body of the secondary battery shown in FIG. 1.
FIG. 3 is a flowchart for explaining a reproduction method according to one embodiment.
FIG. 4 is a flowchart for explaining sub-steps of a recovery step according to one embodiment.
FIG. 5 is a partially enlarged view schematically showing a state of a surface layer of a negative electrode active material (carbon material) and lithium ions, according to one embodiment.

### DETAILED DESCRIPTION

Embodiments of the technology disclosed herein will be described below with reference to accompanying drawings. Matters other than those specifically mentioned in the present specification that are necessary for implementing the technology disclosed herein may be understood as design matters of those skilled in the art based on the conventional technology in the field. The technology disclosed herein can be implemented based on the contents disclosed in the present specification and the technical common knowledge in the field.

In the following drawings, members and parts that have the same actions are described with the same symbols, and a redundant description thereof may be omitted or simplified. In the present specification, the notation "A to B" for a range includes the meanings of "preferably more than A" and "preferably less than B", as well as the meaning of A or more and B or less. Note that in the present specification, the term "secondary battery" refers to an electricity storage device that can be repeatedly charged and discharged, and it is a term that encompasses so-called storage batteries and electricity storage elements such as electric double layer capacitors. The term "lithium ion secondary battery" as used in the present specification refers to a secondary battery that uses lithium ions as charge carriers and in which charging and discharging are implemented by the transfer of charges along with lithium ions between positive and negative electrodes.

### 1. Preparation subjects

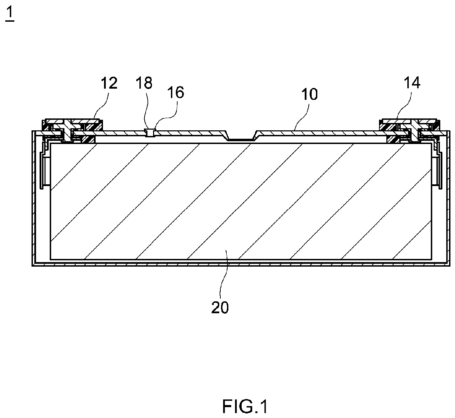

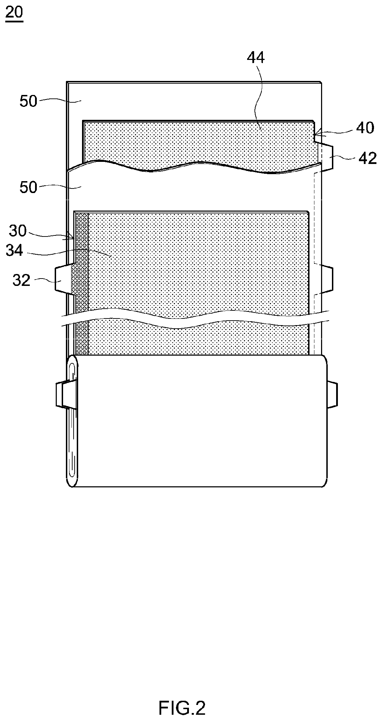

In the reproduction method for a negative electrode active material according to the present embodiment, a predetermined lithium ion secondary battery is prepared, and a negative electrode active material is reproduced. An example of a preparation subject here is a used lithium ion secondary battery. Hereinafter, this lithium ion secondary battery will be specifically described. FIG. 1 is a longitudinal-sectional view schematically showing an internal structure of the lithium ion secondary battery. FIG. 2 is a perspective view schematically showing an electrode body of the lithium ion secondary battery shown in FIG. 1. As shown in FIG. 1, a lithium ion secondary battery 1 includes a case 10, an electrode body 20, and an electrolyte (not shown).

### (1) Case

The case 10 is a box-shaped container. The case 10 houses therein the electrode body 20 and the electrolyte. The case 10 is made of, for example, a metallic material having a certain strength (e.g., aluminum (Al)). The case 10 can be provided with a pouring hole 16. The pouring hole 16 is a hole for pouring the electrolyte. After the electrolyte is poured, the pouring hole 16 is sealed by the sealing member 18. A positive electrode terminal 12 and a negative electrode terminal 14 are attached onto the case 10. The positive electrode terminal 12 and the negative electrode terminal 14 are connected to the electrode body 20 inside the case 10. Specifically, the positive electrode terminal 12 is connected to a positive electrode 30 (see FIG. 2) of the electrode body 20. Aluminum (Al) or the like is used for this positive electrode terminal 12. Meanwhile, the negative electrode terminal 14 is connected to a negative electrode 40 of the electrode body 20. Copper (Cu) or the like is used for this negative electrode terminal 14.

### (2) Electrode body

The electrode body 20 is a power generating element of the lithium ion secondary battery 1. As shown in FIG. 2, the electrode body 20 has the positive electrode 30, the negative electrode 40, and a separator 50. The electrode body 20 shown in FIG. 2 is a wound electrode body. This wound electrode body is fabricated by stacking the positive electrode 30, the negative electrode 40, and the separator 50 to form a long strip-shaped stacked body and then winding the stacked body. However, the structure of the electrode body 20 is not particularly limited, and it may be any other conventionally known structure (such as a stacked electrode body).

The positive electrode 30 includes a positive electrode core 32, which is made of a conductive metal foil, and a positive electrode active material layer 34 provided on a surface of the positive electrode core 32. Aluminum (Al) or the like is used for the positive electrode core 32. The positive electrode active material layer 34 is a composite material layer containing a positive electrode active material, a conductive material, a binder, and the like. The positive electrode active material is a particulate material that can reversibly absorb and release charge carriers. Examples of positive electrode active materials include lithium transition metal composite oxides such as lithium nickel composite oxides (e.g., LiNiO₂, etc.), lithium cobalt composite oxides (e.g., LiCoO₂, etc.), lithium nickel cobalt manganese composite oxides (e.g., LiNi_{1/3}Co_{1/3}Mn_{1/3}O₂, etc.), lithium nickel cobalt aluminum composite oxides (e.g., LiNi_{0.8}Co_{0.15}Al_{0.5}O₂, etc.), lithium manganese composite oxides (e.g., LiMn₂O₄, etc.), and lithium nickel manganese composite oxides (e.g., LiNi_{0.5}Mn_{1.5}O₄, etc.); and lithium transition metal phosphate compounds (e.g., LiFePO₄, etc.). Further, examples of conductive materials include carbon materials such as acetylene black and graphite. In addition, examples of binders include resin materials such as polyvinylidene fluoride (PVDF).

Meanwhile, the negative electrode 40 includes a negative electrode core 42, which is made of a conductive metal foil, and a negative electrode active material layer 44 provided on a surface of the negative electrode core 42. Copper (Cu) or the like is used for the negative electrode core 42. The negative electrode active material layer 44 is a composite material layer containing a negative electrode active material, a binder, a thickener, and the like. The negative electrode active material is a particulate material that can reversibly absorb and release charge carriers. The negative electrode active material as the preparation subject essentially contains carbon material as an essential part. Examples of negative electrode active materials as the preparation subject include carbon materials such as graphite, hard carbon, and soft carbon. The graphite may be natural graphite or artificial graphite. In addition to the carbon material described above, the negative electrode active material may also include lithium titanate (LTO), silicon carbide, a composite containing carbon and silicon (Si-C composite), silicon oxide (SiOx), or the like as long as the effects of the present technology are not significantly impaired. Although not particularly limited, from the viewpoint of reproduction efficiency, the proportion of the carbon material is preferably 50 mass% or more, assuming that the total amount of the negative electrode active material is 100 mass%. Examples of binders include resin materials such as styrene-butadiene rubber (SBR). Examples of thickeners include resin materials such as carboxymethyl cellulose (CMC).

In some preferred embodiments, the positive-to-negative electrode capacity ratio of the lithium ion secondary battery 1 is preferably 1.0 or more. Thus, a negative electrode active material with excellent rapid charge-discharge performance can be reproduced more suitably. The positive-to-negative electrode capacity ratio is preferably 1.5 or more, more preferably 1.2 or more, even more preferably 1.05 or more, and much more preferably 1.0 or more. When the positive-to-negative electrode capacity ratio becomes closer to 1.0, a utilization ratio of the negative electrode active material is increased, so that a surface of the negative electrode active material can be suitably amorphized to obtain a negative electrode active material with excellent rapid charge-discharge performance. When the positive-to-negative electrode capacity ratio is below 1.0 (less than 1.0), metallic lithium precipitates on the negative electrode, which may cause a short circuit. Therefore, the positive-to-negative electrode capacity ratio is preferably 1.0 or more. The upper limit of the positive-to-negative electrode capacity ratio is not particularly limited, but is preferably 2.2 or less, more preferably 2.0 or less, even more preferably 1.9 or less, and much more preferably 1.7 or less. In the present specification, the "positive-to-negative electrode capacity ratio" can be obtained by separately determining a positive electrode capacity and a negative electrode capacity and substituting these capacities into the following formula: positive-to-negative electrode capacity ratio = negative electrode capacity/positive electrode capacity. Here, the positive-to-negative electrode capacity ratio can be easily adjusted, for example, by changing a basis weight of the positive electrode or negative electrode or changing the type of the positive or negative electrode active material. Note that the "basis weight" refers to a value obtained by dividing a mass of an electrode active material layer by an area of a formed region of the electrode active material layer (mass of electrode active material layer/area of its formed region). The positive electrode capacity can be determined, for example, as a capacity (i.e., initial positive electrode charge capacity) when a half cell is fabricated with Li metal as a counter electrode and initially charged within a voltage range corresponding to that of a full cell (e.g., about 2 V to 4.2 V). The negative electrode capacity can then be determined, for example, by summing an initial negative electrode discharge capacity and an operating voltage range of the negative electrode.

The separator 50 is an insulating sheet interposed between the positive electrode 30 and the negative electrode 40. For example, a resin material such as polyethylene (PE), polypropylene (PP), polyester, cellulose, or polyamide is used for the separator 50. A heat-resistant layer including an inorganic filler may be formed on a surface of the separator 50. Such inorganic fillers include inorganic oxides such as aluminum oxide, magnesium oxide, silicon oxide, and titanium oxide; nitrides such as aluminum nitride and silicon nitride; metal hydroxides such as calcium hydroxide, magnesium hydroxide, and aluminum hydroxide; clay minerals such as mica, talc, boehmite, zeolite, apatite, and kaolin; and the like.

### (3) Electrolyte

The electrolyte is present between the positive electrode 30 and the negative electrode 40. This allows charge carriers to move between the positive electrode 30 and the negative electrode 40. Examples of electrolytes include a non-aqueous electrolyte and a gel electrolyte. Any electrolytes usable for conventional lithium ion secondary batteries can be used as the electrolyte without any particular restrictions. The electrolyte typically contains a solvent and a supporting salt. Various nonaqueous solvents usable in this type of lithium ion secondary battery can be used as the solvent. Examples thereof include carbonate-based nonaqueous solvents such as ethylene carbonate (EC), diethyl carbonate (DEC), dimethyl carbonate (DMC), ethyl methyl carbonate (EMC), and the like. For example, lithium salts such as LiPF₆, LiBF₄, and lithium bis(fluorosulfonyl)imide (LiFSI) can be suitably used as the supporting salt. The concentration of the supporting salt is not particularly limited, but it is preferably about 0.7 mol/L or more and 1.3 mol/L or less. The electrolyte may contain components other than the solvent and the supporting salt described above, for example, various additives such as gas generating agents, film-forming agents, dispersants, and thickeners, as long as they do not significantly impair the effects of the present technology. Examples of additives used in a nonaqueous electrolyte 80 include positive and negative electrode film-forming agents such as vinylene carbonate (VC), fluoroethylene carbonate (FEC), and 1,3-propanesultone (PS); overcharge inhibitors such as biphenyl (BP), cyclohexylbenzene (CHB), t-butylbenzene, and t-amylbenzene; and the like.

The lithium ion secondary battery 1 has been described above as an example of the preparation subject in the reproduction method according to the present embodiment. However, the reproduction method disclosed herein is not limited only to a method for preparing the lithium ion secondary battery 1 with the above configuration as the preparation subject. That is, the lithium ion secondary battery as the preparation subject of the reproduction method disclosed herein only needs to include the positive electrode, the negative electrode, and the electrolyte, and is not particularly limited to a specific structure.

### 2. Reproduction method for negative electrode active material

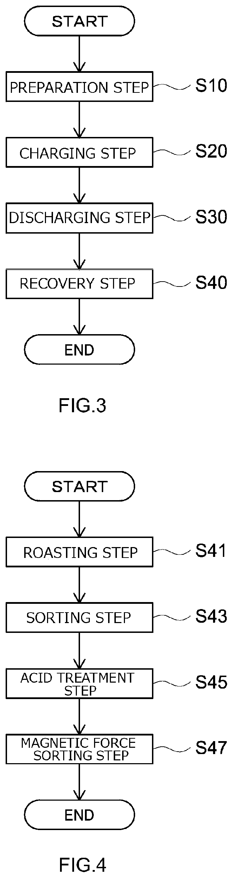

The reproduction method for the negative electrode active material according to the present embodiment will be described below. FIG. 3 is a flowchart for explaining a reproduction method according to one embodiment. FIG. 4 is a flowchart for explaining sub-steps of a recover step S40 according to the embodiment.

As shown in FIG. 3, the reproduction method for a negative electrode active material according to a first embodiment includes a preparation step S10, a charging step S20, a discharging step S30, and the recovery step S40. The reproduction method disclosed herein may further include other steps at any stages, with the remaining processes being identical to those in conventional methods. Each step will be described below.

### (1) Preparation step S10

In the preparation step S10, the lithium ion secondary battery for reproducing a negative electrode active material is prepared. The lithium ion secondary battery prepared here includes the positive electrode, the negative electrode including the negative electrode active material containing a carbon material, and the electrolyte. The details of the lithium ion secondary battery have already been described, and a redundant description thereof is omitted.

### (2) Charging step S20

In the charging step S20, the lithium ion secondary battery prepared in the preparation step S10 is charged. The charging step S20 is characterized by that the lithium ion secondary battery is charged at a charge rate that is relatively lower than a discharge rate of the discharging step S30.

In some preferred embodiments, it is preferable to perform the charging step S20 at a charge rate of 0.5 C or less. Thus, a negative electrode active material with excellent rapid charge-discharge performance can be reproduced. The charge rate of the charging step S20 is preferably 0.5 C or less, more preferably 0.3 C or less, and even more preferably 0.2 C or less. The charge rate of the charging step S20 is not particularly limited, but is, for example, 0.01 C or more, and preferably 0.1 C or more.

In some preferred embodiments, in the charging step S20, it is preferable to charge the lithium ion secondary battery 1 until its state of charge (SOC) reaches 50% or more. Thus, a negative electrode active material with excellent rapid charge-discharge performance can be reproduced. It is more preferable to charge the lithium ion secondary battery 1 until its SOC reaches 80% or more, and even more preferable to charge it until its SOC reaches 100% (rated voltage). The higher the SOC in the charging step S20, the more widely lithium ions diffuse in a layer of the negative electrode active material, and thus the surface of the negative electrode active material can be more suitably amorphized. That is, the negative electrode active material with excellent rapid charge-discharge performance can be suitably reproduced. The charging may be performed once or it can be repeated two or more times, for example, with discharging occurring in between.

The temperature at which the charging step S20 is performed is not particularly limited, but it is, for example, 100°C or lower, and preferably 80°C or lower. The temperature at which the charging step S20 is performed is not particularly limited, but it is, for example, 0°C or higher, and preferably 40°C or higher, and more preferably 50°C or higher.

### (3) Discharging step S30

In the discharging step S30, the lithium ion secondary battery that has undergone the charging step S20 is discharged. Here, the discharging step S30 is characterized in that the lithium ion secondary battery is discharged at a discharge rate higher than the charge rate of the charging step S20.

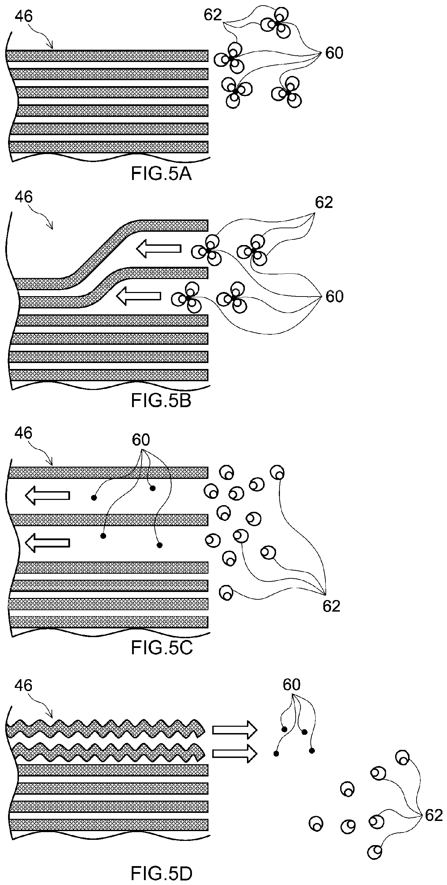

FIG. 5 is a partially enlarged view schematically showing the state of a surface layer of a negative electrode active material 46 and lithium ions 60, according to one embodiment. FIG. 5(A) shows a state before the charging step S20 is performed. FIGS. 5(B) and 5(C) show states during the charging step S20. FIG. 5(D) shows a state during the discharging step S30. In FIGS. 5(B) to 5(D), the behavior of the lithium ions 60 is shown by white arrows for convenience of explanation.

In FIG. 5, the negative electrode active material 46 is a carbon material. Before the charging step S20 is performed, the lithium ions 60 are typically stabilized in the electrolyte in a state where solvent molecules 62 constituting the electrolyte are coordinated (solvated) (see FIG. 5(A)). Here, as shown in FIG. 5(B), by performing the charging step S20 on the lithium ion secondary battery 1, the lithium ions 60 in the electrolyte are inserted between surface layers of the negative electrode active material 46. The inserted lithium ions 60 are diffused into the layers of the negative electrode active material 46 because the solvent molecules 62 are dislodged (desolvated) as the charging step S20 proceeds, as shown in FIG. 5(C). As a result, a space between the layers of the negative electrode active material 46 is expanded. Then, by performing the discharging step S30 at the discharge rate that is relatively higher than the charge rate of the charging step S20, the lithium ions 60 inserted between the layers of the negative electrode active material 46 are detached again to the outside of the negative electrode active material 46, as shown in FIG. 5(D). Through the charging step S20 and discharging step S30, in the negative electrode active material, the surface layers of the negative electrode active material 46 where the lithium ions 60 are inserted and detached become amorphous (non-crystalline) (see FIG. 5(D)). The amorphization of the surface layers of the negative electrode active material 46 improves the rapid charge-discharge performance of the negative electrode active material 46. Then, in the recovery step S40 described below, the negative electrode active material 46 with improved rapid charge-discharge performance can be recovered.

In some preferred embodiments, it is preferable to perform the discharging step S30 at a discharge rate of 0.5 C or more. The discharge rate of the discharging step S30 is preferably 0.5 C or more, more preferably 0.8 C or more, and even more preferably 1.0 C or more. Thus, the negative electrode active material with excellent rapid charge-discharge performance can be reproduced. The discharge rate of the discharging step S30 is not particularly limited, but is 20 C or less, and preferably 10 C or less.

In some preferred embodiments, in the discharging step S30, it is preferable to discharge the lithium ion secondary battery 1 until its state of charge (SOC) reaches 30% or less. The lithium ion secondary battery 1 is discharged until its SOC reaches preferably 20% or less, even more 10% or less, still more preferably 5% or less, and most preferably 0%. The discharging may be performed once or it can be repeated two or more times, for example, with charging occurring in between.

A difference between the discharge rate and the charge rate (discharge rate - charge rate) is preferably 0.4 C or more, preferably 0.7 C or more, preferably 0.8 C or more, or preferably 0.9 C or more, and more preferably 3.9 C or more. The larger the difference between the discharge rate and the charge rate, the more suitably the surface of the negative electrode active material can be amorphized. Therefore, the negative electrode active material with excellent rapid charge-discharge performance can be reproduced. The upper limit of the difference between the discharge rate and the charge rate (discharge rate - charge rate) is not particularly limited, but can be 10 C or less, for example.

### (4) Recovery step S40

In the recovery step S40, the negative electrode active material is recovered from the lithium ion secondary battery that has undergone the charging step S20 and the discharging step S30. A method of recovering the negative electrode active material related to the recovery step S40 is not particularly limited because the conventionally known techniques can be used. For example, as shown in FIG. 4, the recovery step S40 may include, as sub-steps, a roasting step S41, a sorting step S43, an acid treatment step S45, and a magnetic force sorting step S47. These steps will be specifically described below.

### (4-1) Roasting step S41

In the roasting step S41, the lithium ion secondary battery is roasted at a predetermined temperature. Consequently, liquid components (electrolyte, etc.) in the subject to be recovered can be removed, while resin components (binder, separator, etc.) can be carbonized. In addition, the function of the battery can be ceased by performing the roasting step S41. A method of performing the roasting step S41 can employ any technique used in conventional recovery techniques without any particular restrictions, and since it does not characterize the technology disclosed herein, a detailed description thereof is omitted.

### (4-2) Sorting step S43

In the sorting step S43, each member included in the lithium ion secondary battery 1 is sorted. A method of performing the sorting step S43 can employ conventionally known methods, and enables sorting, for example, by use of sifting, visual inspection, or the like.

In the sorting step S43, a crushing process may be performed on the lithium ion secondary battery 1 as needed. Consequently, crushed fragments of the lithium ion secondary battery 1 can be obtained, leading to an improvement in the efficiency of sorting each member. For example, in a case where the lithium ion secondary battery 1 is a subject to be recovered, the case 10 and the electrode body 20 should be crushed. This makes it easier to remove the case 10, the negative electrode core 42, and the positive electrode 30 from the lithium ion secondary battery 1.

Although not limited to this, the crushed fragments of the lithium ion secondary battery 1 obtained by the crushing process described above may besorted using a sieve. In this case, typically, metallic components (Al, Cu, etc.) mainly derived from the case 10, the positive electrode core 32, and the negative electrode core 42 remain on the sieve as coarse grains, while black mass from which the metallic components (Al, Cu, etc.) are almost removed is obtained in the form of fine grains under the sieve. The black mass typically contains the negative electrode active material and the positive electrode active material (e.g., Ni, Co, or the like).

In the sorting step S43, the sorted black mass can be further sorted by a flotation beneficiation method. Consequently, any components (e.g., Ni, Co, etc.) present in the black mass, other than the negative electrode active material, can be almost completely removed. The flotation beneficiation method can employ known technologies such as multi-oil flotation, water surface flotation, and froth flotation without any particular restrictions.

### (4-3) Acid treatment step S45

In the acid treatment step S45, the black mass obtained in the sorting step S43 is mixed with an acidic solution. Consequently, metallic elements (Al, Cu, Ni, Co, etc.) in the black mass dissolve in the acidic solution, while the negative electrode active material remains as a residue without dissolving in the acidic solution. Depending on the composition of a subject to be recovered, the composition of the acidic solution, and the like, some metallic elements (Fe, etc.) in the black mass may also remain as the residue without dissolving in the acidic solution. That is, the residue obtained in the acid treatment step S45 may contain, for example, Fe and the like in addition to the negative electrode active material. In this case, the metallic elements in the residue can be removed, for example, by the magnetic force sorting step S47 described later. A procedure of the acid treatment step S45 can adopt any conventionally known procedure without any particular restrictions. As an example, a suitable pH of the acidic solution used in the acid treatment step S45 is -1.5 to 1.5 (more suitably, -0.5 to 0.5). Consequently, the metallic components in the black mass can be suitably dissolved. Specific examples of acidic solutions include inorganic acids such as sulfuric acid, nitric acid, hydrochloric acid, and phosphoric acid, and organic acids such as citric acid, ascorbic acid, oxalic acid, and acetic acid. Although not limited to this, a reducing agent such as hydrogen peroxide can be added to the acidic solution in the acid treatment step S45. Thus, the metallic elements in the black mass can be suitably dissolved in the acidic solution, thus shortening a treatment time of the acid treatment step S45.

The acidic solution resulting from the acid treatment step S45 and the residue are subjected to solid-liquid separation by filtration or the like to obtain a residue containing the negative electrode active material. The solid-liquid separation method can adopt any conventionally known means without any particular restrictions. The acidic solution resulting from the solid-liquid separation can be used in various methods, including but not limited to conventionally known methods, thereby recovering metallic elements (Ni, Co, etc.) present in the acidic solution.

### (4-4) Magnetic force sorting step S47

In the magnetic force sorting step S47, the residue obtained in the acid treatment step S45 is sorted using magnetic force. This enables sorting of the negative electrode active material as non-magnetized material of the residue and magnetized material (metallic component). That is, in the magnetic force sorting step S47, the negative electrode active material according to the present embodiment can be obtained. The magnetic force sorting step S47 can adopt conventionally known procedures without any particular restrictions.

The reproduction method for a negative electrode active material according to the present embodiment has been described above. The reproduction method according to the present embodiment, which includes the preparation step S10, the charging step S20, the discharging step S30, and the recovery step S40 as described above, can obtain the recovered negative electrode active material in which the negative-electrode active material as the preparation subject (hereinafter referred to as an "active material base") has its surface amorphized. Therefore, according to the reproduction method for a negative electrode active material of the present embodiment, the negative electrode active material with excellent rapid charge-discharge property can be obtained.

### 3. Recovered negative electrode active material (negative electrode active material obtained in recover step S40)

The negative electrode active material obtained by the reproduction method for a negative electrode active material (hereinafter also referred to as the "recovered negative electrode active material") according to the present embodiment is one in which the surface of the negative electrode active material as the preparation subject is amorphized through the charging step S20 and the discharging step S30 as mentioned above. That is, this negative electrode active material has features different from those of the negative electrode active material included in the lithium ion secondary battery 1 prepared in the preparation step S10. The features of the recovered negative electrode active material will be described in detail below.

The recovered negative electrode active material corresponds to carbon material of the negative electrode active material as the preparation subject. In other words, the recovered negative electrode active material is obtained by amorphizing a surface of the carbon material through the charging step S20 and the discharging step S30. The recovered negative electrode active material is a particulate material that can reversibly absorb and release charge carriers. As the active material base, a carbon material such as graphite, hard carbon, or soft carbon is typically used. The graphite may be natural graphite or artificial graphite.

One example of an index regarding surface properties of the recovered negative electrode active material according to the present embodiment is a ratio (I_{D}/I_{G}) of a D-band intensity (I_{D}) to a G-band intensity (I_{G}) of the negative electrode active material, as determined by a Raman spectroscopy. The I_{D}/I_{G} ratio is average information indicating crystallinity of the negative electrode active material from its surface to a nano-order depth. Note that the "ratio (I_{D}/I_{G}) of the D band intensity (I_{D}) to the G band intensity (I_{G}) of the negative electrode active material, as determined by the Raman spectroscopy" as used in the present specification can be measured using a known Raman spectrometer as follows. Specifically, a Raman spectrum of the negative electrode active material is measured using a laser at a wavelength of 532 nm. Using the Raman spectrum, a peak intensity of the Raman spectrum around 1350 cm⁻¹ is determined as the D band intensity (I_{D}), and a peak intensity thereof around 1590 cm⁻¹ is determined as the G band intensity (I_{G}), so that the value of I_{D}/I_{G} can be calculated and determined.

In some preferred embodiments, the ratio (I_{D}/I_{G}) of the D-band intensity (I_{D}) to the G-band intensity (I_{G}) of the recovered negative electrode active material, as determined by the Raman spectroscopy, is preferably 0.38 or more. The G-band intensity (I_{G}) is an index indicative of a typically regular graphite structure, and the D-band intensity (I_{D}) is an index indicative of a typically irregular graphite structure. That is, the larger the I_{D}/I_{G} ratio of the recovered negative electrode active material, the more suitably the surface of the recovered negative electrode active material is amorphized. Therefore, the larger the I_{D}/I_{G} ratio of the recovered negative electrode active material, the more its capacity to receive lithium ions is improved. In other words, the discharge capacity of the recovered negative electrode active material is improved, and the rapid charge-discharge performance becomes better. The I_{D}/I_{G} ratio of the recovered negative electrode active material is preferably 0.38 or more, more preferably 0.40 or more, even more preferably 0.42 or more, and still more preferably 0.47 or more. The upper limit of the I_{D}/I_{G} ratio of the recovered negative electrode active material is not particularly limited, but can be, for example, 1.0 or less.

Another example of an index regarding surface properties of the recovered negative electrode active material according to the present embodiment is an interlayer distance d(002) of the recovered negative electrode active material based on an X-ray diffraction (XRD) method. The interlayer distance d(002) of the negative electrode active material is average information indicating the crystallinity of the negative electrode active material from its surface to a micron-order depth. The "interlayer distance d(002) of the negative electrode active material" in the present specification can be measured by a commercially available X-ray diffraction apparatus using a CuKα ray source according to a known method.

In some preferred embodiments, the interlayer distance d(002) of the recovered negative electrode active material based on the X-ray diffraction (XRD) method is preferably 3.350 Å or more and 3.369 Å or less. The recovered negative electrode active material in this example has a small interlayer distance d(002) when recovered as the recovered negative electrode active material because the surface of the recovered negative electrode active material is amorphized through the charging step S20 and the discharging step S30 described above. The smaller the interlayer distance d(002) of the recovered negative electrode active material, the more suitably the surface of the recovered negative electrode active material is amorphized, which makes it easier for lithium ions of the negative electrode active material to be inserted or detached, resulting in better rapid charge-discharge performance. The interlayer distance d(002) of the recovered negative electrode active material is preferably 3.369 Å or less, more preferably 3.361 Å or less, and even more preferably 3.359 Å or less. The interlayer distance d(002) of the recovered negative electrode active material is preferably 3.350 Å or more.

An average particle diameter (median diameter: D50) of the recovered negative electrode active material is not particularly limited, but is, for example, 0.1 µm or more and 50 µm or less, and preferably 1 µm or more and 25 µm or less. Note that the average particle diameter (D50) of the recovered negative electrode active material can be determined, for example, by a laser diffraction scattering method.

One embodiment of the technology disclosed herein has been described above. The technology disclosed herein is not limited to the embodiment described above, but includes other embodiments with various changes in the configuration.

### <Applications for negative electrode active material>

The negative electrode active material (recovered negative electrode active material) obtained by the reproduction method according to the present embodiment can be used for various applications, including, but not limited to, secondary batteries. The secondary battery including the negative electrode active material obtained by the reproduction method according to the present embodiment is usable for various applications, but it can be suitably used, for example, as a motor power source (drive power source) to be installed on vehicles, such as passenger cars and trucks. The vehicle is not limited to a particular type, and may be, for example, a plug-in hybrid electric vehicle (PHEV), a hybrid electric vehicle (HEV), or a battery electric vehicle (BEV). The secondary batteries can be suitably used to configured an assembled battery, in which plural secondary batteries are arranged in a predetermined array direction, and a load is applied from the array direction by a restraining mechanism. The shape of the secondary battery is not limited to a rectangular shape, but it may be coin-shaped, button-shaped, cylindrical, or the like. It can also be configured as a secondary battery with a laminated case.

Examples related to the technology disclosed herein will be described below, but they are not intended to limit the technology disclosed herein to that shown in such examples.

### <Investigation Example 1: Investigation of charging and discharging conditions>

### [Preparation of Lithium Ion Secondary Battery]

### (Example 1)

First, a used lithium ion secondary battery was prepared, in which an electrode body having a positive electrode, a negative electrode and a separator and an electrolyte were housed in a case.

The positive electrode was prepared which had a positive electrode active material layer containing LiNi_{1/3}Co_{1/3}Mn_{1/3}O₂ (lithium nickel cobalt manganese composite oxide) as the positive electrode active material on a surface of an aluminum positive electrode core.

The negative electrode was prepared which had a negative electrode active material layer containing natural graphite as the negative electrode active material on a surface of a copper negative electrode core.

The electrolyte was prepared by dissolving LiPF₆ at a concentration of 1 mol/L as the supporting salt in a mixed solvent containing ethylene carbonate (EC), dimethyl carbonate (DMC), and ethyl methyl carbonate (EMC) at a volume ratio of EC : DMC : EMC = 30 : 30 : 40.

### [Charging Step]

Constant-current constant-voltage (CCCV) charging was performed on the lithium ion secondary battery prepared above at a charge rate of 0.1 C in a temperature environment of 25°C until an end-of-charge SOC thereof was 100%.

### [Discharging Step]

Constant-current constant-voltage (CCCV) discharging was performed on the lithium ion secondary battery subjected to the charging step above, at a discharge rate of 1 C in a temperature environment of 25°C until an end-of-discharge SOC thereof was 10%.

### [Recovery of Negative Electrode Active Material]

The lithium ion secondary battery subjected to the discharging step above was disassembled, and the negative electrode was removed. The negative electrode active material layer was peeled off from the negative electrode by washing with water. The negative electrode active material was recovered from the negative electrode active material layer and dried at 100°C to remove water. The powdered negative electrode active material was recovered in this way.

### (Examples 2 to 4)

In Examples 2 to 4, lithium ion secondary batteries with the same configuration as in Example 1 were prepared, and the charging step was performed on them at respective charge rates listed in Table 1. The charging step and the discharging step were performed on the same conditions as those in Example 1 except for the above point, and negative electrode active materials according to Examples 2 to 4 were recovered.

### (Examples 5 and 6)

In Examples 5 and 6, lithium ion secondary batteries with the same configuration as in Example 1 were prepared, and the charging step was performed on them until their end-of-charge SOC reached respective values listed in Table 1. The charging step and the discharging step were performed on the same conditions as those in Example 1 except for the above point, and negative electrode active materials according to Examples 5 and 6 were recovered.

### (Examples 7 to 10)

In Examples 7 to 10, lithium ion secondary batteries with the same configuration as in Example 1 were prepared, and the discharging step was performed on them at respective discharge rates listed in Table 1. The charging step and the discharging step were performed on the same conditions as those in Example 1 except for the above point, and negative electrode active materials according to Examples 7 to 10 were recovered.

### (Examples 11 to 14)

In Examples 11 and 14, lithium ion secondary batteries with the same configuration as in Example 1 were prepared, and the discharging step was performed on them until their end-of-discharge SOC reached respective values listed in Table 1. The charging step and the discharging step were performed on the same conditions as those in Example 1 except for the above point, and negative electrode active materials according to Examples 11 to 14 were recovered.

### (Example 15)

In Example 15, a lithium ion secondary battery with the same configuration as in Example 1 was prepared. In Example 15, a negative electrode active material was recovered as it was without performing the charging and discharging steps. The same procedure as in Example 1 was performed except for this point.

### [Evaluation of Interlayer Distance d(002) of Recovered Negative Electrode Active Material]

The negative electrode active materials according to Examples 1 to 15 that were recovered (hereinafter also referred to as the "recovered negative electrode active materials") were evaluated. First, the interlayer distance d(002) of the recovered negative electrode active material was evaluated using the X-ray diffraction (XRD) method. Specifically, XRD measurement was performed on particles of the recovered negative electrode active material under the following conditions. The results are shown in Table 1.
Measurement equipment: Smart Lab (manufactured by Rigaku Corporation)
Measurement method: wide angle method
Source: CuKα ray
Measurement range: 5 to 90°
Voltage: 45 kV
Current: 200 mA

### [Evaluation of Raman Peak Intensity Ratio (I_{D}/I_{G}) of Recovered Negative Electrode Active Material]

Next, the Raman peak intensity ratio (I_{D}/I_{G}) was evaluated for the recovered negative electrode active materials according to Examples 1 to 15. Specifically, Raman spectra were obtained using a commercially available microscopic laser Raman analyzer (manufactured by Thermo Fisher Scientific Inc.) under the following conditions. The Raman peak intensity ratio (I_{D}/I_{G}) was calculated with the peak intensity at 1470 cm⁻¹ of the obtained Raman spectrum defined as I_{D} and the peak intensity at 1570 cm⁻¹ as I_{G}. The above Raman spectrum measurement was performed 10 times (n = 10), and an average value of the Raman peak intensity ratios was calculated. The results are shown in Table 1.
Objective lens : 50x
Laser wavelength: 532nm
Laser output: 1mV

### [Fabrication of Coin Cells for Evaluation]

In order to evaluate the performance of the recovered negative electrode active material, a coin cell was fabricated here as a single-pole cell having a negative electrode as a working electrode and a metallic lithium member as a counter electrode, which were arranged to face each other. First, the negative electrode was fabricated using the recovered negative electrode active material. Specifically, a negative electrode paste was prepared by mixing the recovered negative electrode active material, styrene butadiene rubber (SBR) as a binder, and carboxymethyl cellulose (CMC) as a thickener in ion-exchanged water as a solvent such that the mass ratio of solid contents of the recovered negative electrode active material : SBR : CMC was 98 : 1 : 1. Such a negative electrode paste was applied to one surface of a long sheet-shaped copper foil (10 µm thick) as a negative electrode core (negative electrode current collector), dried, and then pressed by a roll press machine to fabricate a sheet-shaped negative electrode. The sheet-shaped negative electrode was punched out to the size of a coin cell, and the weight (g) of the negative electrode after the punching was measured. The weight (g) of the negative electrode active material was determined by subtracting the weight of the negative electrode core from the weight of the negative electrode and then multiplying the result by 0.98 (proportion of the recovered negative electrode active material in the entire negative electrode active material layer).

A porous polyolefin sheet with a thickness of 24 µm that had a three-layer structure of PP/PE/PP was used as the separator. Note that the used separator had a ceramic layer (4 µm thick), including alumina (Al₂O₃), boehmite, and the like, applied to one of its surfaces.

The electrolyte was prepared by dissolving LiPF₆ as the supporting salt at a concentration of 1.0 mol/L in a mixed solvent containing ethylene carbonate (EC), dimethyl carbonate (DMC) and ethyl methyl carbonate (EMC) at a volume ratio of 30 : 30 : 40.

The negative electrode, separator, and metallic lithium were stacked in this order and then impregnated with the electrolyte to fabricate a coin cell. At this time, the ceramic layer of the separator and the negative electrode are stacked to face each other.

### [Evaluation of Discharge Specific Capacity]

The coin cells for evaluation obtained above were used to evaluate discharge specific capacities of the recovered negative electrode active materials according to Examples 1 to 15. Specifically, each coin cell for evaluation was placed in an environment of 25°C. Then, the lithium counter electrode was charged with a constant current at a current rate of 0.2 C up to 3 mV, and further charged at a constant voltage of 3 mV until the current rate reached 1/10 C. Thereafter, the lithium counter electrode of each coin cell for evaluation was discharged with a constant current at a current value of 0.2 C to 1.6 V and further discharged at a constant voltage of 1.6 V until the current rate reached 1/10 C. The discharge capacity (mAh) during the discharging at a rate of 0.2 C was determined in this way. From this discharge capacity and the weight (g) of the negative electrode active material, the discharge specific capacity of the negative electrode active material (mAh/g) was calculated. The results are shown in Table 1.

### [Evaluation of Rate Performance]

Next, using the coin cells for evaluation described above, the rate performance was evaluated as an index of the rapid charge-discharge performance of the recovered negative electrode active materials according to Examples 1 to 15. Specifically, each coin cell for evaluation after the above measurement of the discharge specific capacity was placed in an environment of 25°C. Then, the lithium counter electrode was charged with a constant current at a current rate of 1 C up to 3 mV, and further charged at a constant voltage of 3 mV until the current rate reached 1/10 C. Thereafter, the lithium counter electrode of each coin cell for evaluation was discharged with a constant current at a current value of 1 C to 1.6 V and further discharged at a constant voltage of 1.6 V until the current rate reached 1/10 C. The discharge capacity (mAh) during the discharging at a rate of 1 C was determined in this way. Using the discharge capacity (mAh) during the discharging at 1 C and the discharge capacity (mAh) during the discharging at 0.2 C as measured when evaluating the discharge specific capacity, the rate performance (%) was determined by the following formula (1). Note that the higher a numerical value of the rate performance (%), the better the charge-discharge performance of the recovered negative electrode active material is considered to be. The results are shown in Table 1. Rate performance (%) = (Discharge capacity during discharging at 1C (mAh)/Discharge capacity during discharging at 0.2 C (mAh)) × 100

### [Table 1]

**Table 1**

| | Charging step | | Discharging step | | Recovered negative electrode active material | | | |
|---|---|---|---|---|---|---|---|---|
| | Charge rate (C) | End-of-charge SOC (%) | Discharge rate (C) | End-of-discharge SOC (%) | d(002) (Å) | I_{D}/I_{G} | Discharge specific capacity (mAh/g) | Rate performance (%) |
| Example 1 | 0.1 | 100 | 1.0 | 10 | 3.359 | 0.48 | 362.5 | 95.1 |
| Example 2 | 0.2 | 100 | 1.0 | 10 | 3.360 | 0.45 | 361.7 | 94.5 |
| Example 3 | 0.3 | 100 | 1.0 | 10 | 3.359 | 0.41 | 360.8 | 92.2 |
| Example 4 | 0.5 | 100 | 1.0 | 10 | 3.359 | 0.40 | 359.6 | 90.8 |
| Example 5 | 0.1 | 50 | 1.0 | 10 | 3.359 | 0.39 | 358.5 | 84.5 |
| Example 6 | 0.1 | 80 | 1.0 | 10 | 3.360 | 0.41 | 360.1 | 91.6 |
| Example 7 | 0.1 | 100 | 0.5 | 10 | 3.360 | 0.40 | 359.3 | 90.5 |
| Example 8 | 0.1 | 100 | 0.8 | 10 | 3.361 | 0.42 | 361.1 | 93.2 |
| Example 9 | 0.1 | 100 | 2.0 | 10 | 3.359 | 0.48 | 362.4 | 95.8 |
| Example 10 | 0.1 | 100 | 4.0 | 10 | 3.361 | 0.48 | 362.6 | 96.2 |
| Example 11 | 0.1 | 100 | 1.0 | 30 | 3.359 | 0.39 | 358.8 | 88.5 |
| Example 12 | 0.1 | 100 | 1.0 | 20 | 3.360 | 0.40 | 359.9 | 90.3 |
| Example 13 | 0.1 | 100 | 1.0 | 5 | 3.359 | 0.47 | 362.5 | 95.3 |
| Example 14 | 0.1 | 100 | 1.0 | 0 | 3.359 | 0.47 | 362.6 | 95.6 |
| Example 15 | - | - | - | - | 3.361 | 0.37 | 358.1 | 82.3 |

As shown in the results of Table 1, in Example 1, better results were obtained in terms of I_{D}/I_{G} and interlayer distance d(002), and better results were also obtained in terms of discharge specific capacity and rate performance, compared to Example 15, where the negative electrode active material was recovered without performing the charging and discharging steps. From the results of Examples 2 to 4 and 7 to 10, it was found that in cases where the discharge rate was relatively higher than the charge rate even when the charge rate or discharge rate was different from that in Example 1, better results were obtained in terms of I_{D}/I_{G} and interlayer distance d(002), and better results were also obtained in terms of discharge specific capacity and rate performance, as in Example 1. In addition, in Examples 5 and 6 that had the end-of-charge SOC different from that in Example 1, and also in Examples 11 to 14 that had the end-of-discharge SOC different from that in Example 1, better results were obtained in terms of I_{D}/I_{G} and interlayer distance d(002), and better results were also obtained in terms of discharge specific capacity and rate performance.

### <Investigation Example 2: Investigation about positive-to-negative electrode capacity ratio in lithium ion secondary battery as preparation subject>

### (Examples 16 to 21)

Here, the positive-to-negative electrode capacity ratios in lithium ion secondary batteries as the preparation subject were investigated. Specifically, in Examples 16 to 21, the lithium ion secondary batteries with the same configuration as in Example 1 were prepared, except that the positive-to-negative electrode capacity ratios were set as listed in Table 2. Then, the charging step and the discharging step were performed on the lithium ion secondary batteries according to Examples 16 to 21 under the same conditions as in Example 1, and negative electrode active materials according to Examples 16 to 21 were recovered (hereinafter referred to as "recovered negative electrode active materials"). The same evaluation as in Investigation Example 1 was performed on the recovered negative electrode active materials according to Examples 16 to 21. The results are shown in Table 2. Thereafter, coin cells for evaluation according to Examples 16 to 21 were fabricated and evaluated in the same manner as in Investigation Example 1. The results are shown in Table 2.

### [Table 2]

**Table 2**

| | Preparation subject | Charging and discharging | Recover negative electrode active material | | | |
|---|---|---|---|---|---|---|
| | Positive-to-negative electrode capacity ratio (Negative electrode capacity /Positive electrode capacity ) | Implementation of charching step and discharging step | d(002) (Å) | I_{D}/I_{G} | Discharge specific capacity (mAh/g) | Rate performance (%) |
| Example 1 | 1.05 | ○ | 3.359 | 0.48 | 362.5 | 95.1 |
| Example 16 | 1.10 | ○ | 3.362 | 0.45 | 360.3 | 94.3 |
| Example 17 | 1.20 | ○ | 3.359 | 0.40 | 359.8 | 90.2 |
| Example 18 | 1.50 | ○ | 3.360 | 0.41 | 360.1 | 90.3 |
| Example 19 | 1.70 | ○ | 3.359 | 0.40 | 359.7 | 89.4 |
| Example 20 | 1.90 | ○ | 3.359 | 0.39 | 359.5 | 84.6 |
| Example 21 | 2.00 | ○ | 3.359 | 0.39 | 359.2 | 84.3 |
| Example 15 | 1.05 | - | 3.361 | 0.37 | 358.1 | 82.3 |

As shown in the results of Table 2, in Examples 16 to 21, in each of which the positive-to-negative electrode capacity ratio was 1.0 or more, better results were obtained in terms of discharge specific capacity and rate performance, compared to Example 15, where the negative electrode active material was recovered without performing the charging and discharging steps.

As described above, the specific aspects of the technology disclosed herein are those described in the following respective items.
Item 1: A reproduction method for a negative electrode active material from a used lithium ion secondary battery, comprising:
   a preparation step of preparing the used lithium ion secondary battery including a positive electrode, a negative electrode including a negative electrode active material containing a carbon material, and an electrolyte;
   a charging step of charging the lithium ion secondary battery;
   a discharging step of discharging the lithium ion secondary battery obtained after the charging step, at a discharge rate higher than a charge rate of the charging step; and
   a recovery step of recovering the negative electrode active material containing the carbon material from the negative electrode in the lithium ion secondary battery obtained after the discharging step.
Item 2: The reproduction method for a negative electrode active material according to Item 1, wherein
   a positive-to-negative electrode capacity ratio (negative electrode capacity/positive electrode capacity) of the lithium ion secondary battery prepared in the preparation step is 1.0 or more.
Item 3: The reproduction method for a negative electrode active material according to Item 1 or 2, wherein
   the charging step is performed at a charge rate of 0.5 C or less.
Item 4: The reproduction method for a negative electrode active material according to any one of Items 1 to 3, wherein
   the charging step is performed until a state of charge (SOC) of the lithium ion secondary battery is 50% or more.
Item 5: The reproduction method for a negative electrode active material according to any one of Items 1 to 4, wherein
   the discharging step is performed at a discharge rate of 0.5 C or more. Item 6: The reproduction method for a negative electrode active material according to any one of Items 1 to 5, wherein
   the discharging step is performed until the SOC of the lithium ion secondary battery is 30% or less.
Item 7: The reproduction method for a negative electrode active material according to any one of Items 1 to 6, wherein
   a ratio (I_{D}/I_{G}) of a D-band intensity (I_{D}) to a G-band intensity (I_{G}) of the negative electrode active material recovered in the recovery step, as determined by a Raman spectroscopy, is 0.38 or more.
Item 8: The reproduction method for a negative electrode active material according to Item 7, wherein
   an interlayer distance d(002) of the recovered negative electrode active material, obtained in the recovery step, based on an X-ray diffraction method is 3.350 Å or more and 3.369 Å or less.

## Claims

1. A reproduction method for a negative electrode active material from a used lithium ion secondary battery (1), comprising:
a preparation step (S10) of preparing the used lithium ion secondary battery (1) including a positive electrode (30), a negative electrode (40) including a negative electrode active material (46) containing a carbon material, and an electrolyte;
a charging step (S20) of charging the lithium ion secondary battery (1);
a discharging step (S30) of discharging the lithium ion secondary battery (1) obtained after the charging step (S20), at a discharge rate higher than a charge rate of the charging step (S20); and
a recovery step (S40) of recovering the negative electrode active material (46) containing the carbon material from the negative electrode (40) in the lithium ion secondary battery (1) obtained after the discharging step (S30).

2. The reproduction method for a negative electrode active material according to claim 1, wherein
a positive-to-negative electrode capacity ratio (negative electrode capacity/positive electrode capacity) of the lithium ion secondary battery (1) prepared in the preparation step (S10) is 1.0 or more.

3. The reproduction method for a negative electrode active material according to claim 1 or 2, wherein
the charging step (S20) is performed at a charge rate of 0.5 C or less.

4. The reproduction method for a negative electrode active material according to any one of claims 1 to 3, wherein
the charging step (S20) is performed until a state of charge (SOC) of the lithium ion secondary battery (1) is 50% or more.

5. The reproduction method for a negative electrode active material according to any one of claims 1 to 4, wherein
the discharging step (S20) is performed at a discharge rate of 0.5 C or more.

6. The reproduction method for a negative electrode active material according to any one of claims 1 to 5, wherein
the discharging step (S20) is performed until an SOC of the lithium ion secondary battery (1) is 30% or less.

7. The reproduction method for a negative electrode active material according to any one of claims 1 to 6, wherein
a ratio (I_{D}/I_{G}) of a D-band intensity (I_{D}) to a G-band intensity (I_{G}) of the negative electrode active material (46) recovered in the recovery step (S40), as determined by a Raman spectroscopy, is 0.38 or more.

8. The reproduction method for a negative electrode active material according to claim 7, wherein
an interlayer distance d(002) of the recovered negative electrode active material (46), obtained in the recovery step (S 40), based on an X-ray diffraction method is 3.350 Å or more and 3.369 Å or less.
